## Europäisches Patentamt
## European Patent Office
## Office européen des brevets

(11) Publication number: **0 177 475**
**B1**

(12) **EUROPEAN PATENT SPECIFICATION**

(45) Date of publication of patent specification: **18.04.90**

(21) Application number: **85850307.1**

(22) Date of filing: **02.10.85**

(51) Int. Cl.⁵: **F 16 L 1/12, F 16 L 9/19**

(54) Pipeline cable for use under water.

(30) Priority: **04.10.84 NO 843991**

(43) Date of publication of application:
**09.04.86 Bulletin 86/15**

(45) Publication of the grant of the patent:
**18.04.90 Bulletin 90/16**

(84) Designated Contracting States:
**BE DE FR GB IT NL**

(56) References cited:
**DE-A-1 918 575**
**DE-U-1 861 324**
**DE-U-8 320 837**
**US-A-3 400 737**
**US-A-3 757 824**

(73) Proprietor: **KVAERNER SUBSEA CONTRACTING A/S**
**P.O. Box 290 Elveveien 33**
**N-1324 Lysaker (NO)**

(72) Inventor: **Bognaes, Ragnar**
**Stjerneveien 12**
**N-1500 Moss (NO)**
Inventor: **Kindem, Bjorn**
**Sofus Sorensens vei 14**
**N-1600 Fredrikstad (NO)**

(74) Representative: **Onn, Thorsten et al**
**AB STOCKHOLMS PATENTBYRA Box 3129**
**S-103 62 Stockholm (SE)**

## Description

This invention relates to a pipeline cable according to the first portion of Claim 1. Control lines, either as individual lines or as a ready cable, can lie in the core of the cable. A pipeline can also form the core.

In laying down pipelines on the ocean bed, there are currently three main methods to be used. According to the first method the pipelines are produced in full length—within certain limits—on land, for thereafter to be launched at sea and towed out to the place for laying down the pipe on the ocean bed.

According to the second method the pipeline is produced on the deck of a pipelayer vessel by welding together lengths of pipe as they are lowered overboard by means of suitable equipment.

According to the third method, the pipeline is reeled continuously on to a drum with a vertical or horizontal axle, placed on deck aboard a pipeline vessel.

The pipeline is generally reeled on to the drum at a base on land where short lengths of pipe can be welded together under protected and controlled conditions, so that a continuous pipeline emerges to be reeled on to the drum.

The vessel is thereafter brought out to the place for laying the pipe and the pipe laid out on the ocean bed by being reeled off the drum. The method demands a certain dimension of the drum in relation to the diameter of the pipeline so that the material of the pipeline in the course of being bent on the drum shall not be strained beyond what is permissible. The method demands also elaborate equipment to control that the pipeline will be reeled correctly, both on to and off the drum, and that the pipeline is given the right curvature from the vessel and down to the ocean bed. The latter control is for keeping the strain on the pipeline during the laying-out process within permissible limits.

At the reeling on to the drum, the pipeline will be given a curve which stretches the material in the pipeline beyond its yield point so that the pipe will receive a permanent deformation after the reeling on. This deformation must, after the reeling off, be removed from the pipeline before it is lowered overboard.

A straightening mechanism for this purpose may comprise a series of rollers or belts between which the pipeline passes, and which gives the pipeline a resilience sufficient for removing the curvature and allowing the pipeline to be lowered overboard in its original straight form.

This straightening mechanism can also be combined with the mechanism which controls the tension in relation to the speed at which the pipeline is lowered (equal to the speed of the vessel), so that it is given the desired curvature down to the ocean bed.

There will often be a need for laying several pipelines together, and it is known to lay several pipelines gathered in one bundle.

In order to make the pipeline bundle more flexible, it has been suggested that one may let the individual, flexible pipelines in such a bundle follow helical lines in the bundle.

Such a bundle of pipelines is, for example, known from Norwegian Patent 130,330. There one has described a flexible pipeline cable for use under water. This known pipeline cable comprises a core lying axially in the cable, and several pipelines arranged in a helical configuration around the core. Filler material is placed around the pipelines to insulate these and form insulation between them. A protective sheath encloses the pipelines and filler material, so that an integrated cable structure is formed. However, the twined, pipelines cannot absorb tensile stress and said known embodiment therefore comprises special elements to withstand tensile stress. These elements, for example wires, lie axially along the core and are incorporated in the filler material. The core may, in addition, contain a pipeline running axially, with sufficient tensile strength for the laying-out operation.

In laying out a pipeline bundle consisting of rigid pipes by means of the drum pipelayer method, the pipeline bundle must during the reeling off be directed through a straightening mechanism for a straightening out. In addition, the mechanism, possibly a special straightening machine, must grip the pipeline bundle firmly and release it at a definite speed, so that the pipeline bundle during the laying out has a definite tensile stress.

In order to keep the diameter of the reel or drum down at a reasonable and practical size in relation to the diameter of the pipe bundle, one will allow that the individual pipes in the pipe bundle, during their bending around the drum will be exposed to a tensile stress beyond the yield point, that is, beyond the area of elasticity, a circumstance which then requires that the pipe bundle must go through a straightening process after the reeling off.

Thus, there is a need for a pipeline bundle which is particularly suited for laying out from a drum, and according to the invention a pipeline cable, as mentioned by way of introduction, is therefore suggested, said cable being characterized in that the core is pressure resistant so that, during a radial compressive stress against the sheath, a transfer of force occurs through the sheath and the filler material to the pipelines which thereby are fixed with respect to the filler material and absorb tensile stress exerted on the cable.

In said embodiment of the pipeline cable, all pipelines can absorb the tensile force as do the strands in an ordinary rope. The compression resistant core forms resistance against the compressive forces exerted from outside and has sufficient rigidity to keep the pipelines in position in the cross section.

At compressive strain during the straightening out, the individual pipelines in the pipeline cable will be kept in position in the cross section and not yield. Thereby the pipeline cable can be straightened out in a satisfactory manner.

In general, the pipelines will be placed in such a way that they can slide in relation to the filler material. An adhesive connection between the filler material and the individual pipeline will not necessarily be an interference, provided that the filler material can absorb the movement of the pipeline during bending stresses on the pipeline cable.

The new pipeline cable can be produced in different ways. The compression resistant core of filler material can be built up from separate elements, laid in position one after the other in the longitudinal direction of the bundle, and the rest of the filler material can also be inserted as ready-made, shaped elements. The filler material can also be sprayed or pressed between and around the pipelines at the same time as the sheath is built up (for example by wrapping).

In the core of filler material, thinner pipelines may possibly be inserted, for example for control fluids of different types, such as hydraulic liquids; and electric lines, optical fibres, etc. may be inserted.

The core of filler material can with advantage be composed of a heavier plastic material. The filler material between the pipelines and the sheath can also be made suitable for heat insulation of the pipelines.

As material for the pipelines one may, with advantage, employ stainless steel types suitable for use under water.

In order to protect the core of filler material and the thinner pipelines, electrical lines, etc. enclosed therein, against possible water penetration through a damaged sheath, sealing members may be inserted between the twined pipelines inside. Possibly a waterproof membrane may be applied around the twined pipelines, between these and the filler material, or in the surrounding filler material.

The pipeline cable may appropriately be equipped with waterproof bulkheads in the area of the filler material, thereby providing a barrier to stop a spreading of water penetration beyond the respective longitudinal section of the pipeline cable.

The outer sheath may appropriately be reinforced to receive the tensile forces.

The invention shall be explained further in the following section with reference to the drawings, which show a cross section through a possible, preferred embodiment of a pipeline cable according to the invention.

The pipe cable 1 shown in the cross section, comprises a number of pipelines of various dimensions. Thus, it comprises four centrally located pipelines 2 with relatively small diameter; outside of these, four relatively large pipelines 3; and between these, four pipelines 4. These latter pipelines have, as the drawings show, a diameter which is less than the diameter of pipelines 3.

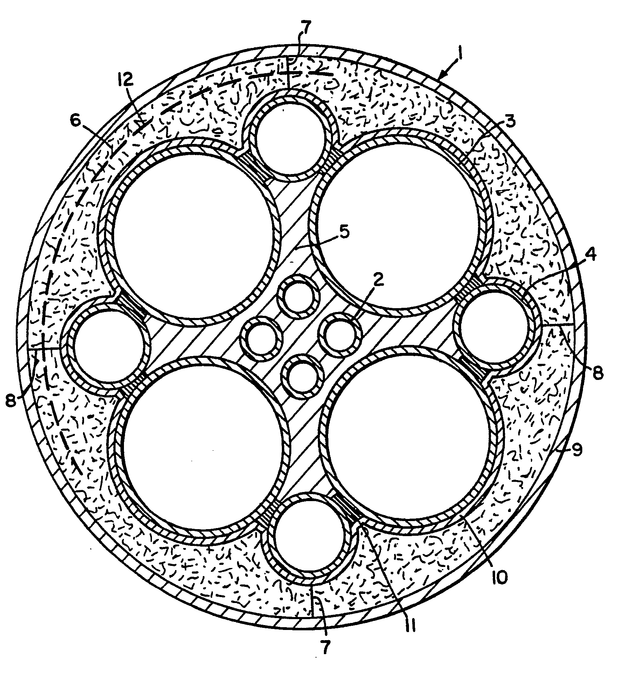

The four centrally located thinner pipelines 2 are imbedded in a core of filler material 5. This core of filler material is built up a heavier plastic material. It has, as shown, a cruciform cross section and is provided with, in the cross section, rounded tracks into which the pipelines fit. At the end of each arm of the cross, rounded tracks, into which pipelines 4 fit, have also been provided, as shown in the drawing.

All pipelines 2, 3 and 4 have a helical configuration lengthwise in the pipeline cable. This means that all pipelines follow helical lines with a definite gradient. How large this gradient shall be must be determined in each case, depending on the dimension of the pipeline cable and its intended use. In connection with this, one must take into consideration that all pipelines shall be able to absorb tensile forces in the same manner as strands in an ordinary rope, but to a greater or lesser degree.

Around the pipelines 2, 3 and 4 a filler material 6 is applied. This is in the embodiment example divided into four in the cross section, as suggested with the dividing lines 6 and 8, and the filler material can here appropriately be of expanded PVC, thereby serving, inter alia, as heat insulation for the pipelines. Around the whole structure an outer protective sheath 9 is applied, made of, for example, a plastic material with or without reinforcement. This sheath 9 can be applied continuously to the full length of the pipeline cable at the place of production.

In laying a pipeline cable as shown, there will be tensile forces in it, and these must be absorbed by the pipelines. In laying the pipeline cable one makes use of an appropriate stretching machine which is supplied with means for gripping firmly around the pipeline cable. The stretching machine will thus have a firm grip around the pipeline cable and release it at a definite, adjusted rate of speed. In the stretching machine the pipeline cable will thus be exposed to external pressure against the sheath. The forces which thereby influence the pipeline bundle in the cross section will be transferred through the sheath 9 and further through the filler material 6 and to the pipelines 3 and 4. The core of filler material 5 is compression resistant and will effect a fixation of the pipelines during the external pressure action.

This fixation also plays an essential part at the deliberate bending or straightening of the pipeline cable through a suitable means which possibly may be combined with the stretching machine.

At the coiling up or reeling on it is desirable to limit the diameter of the coil or reel by allowing, during the bending of the pipeline cable, the material of said pipeline to be strained to a certain extent beyond the yield point, that is, beyond the area of elasticity.

The pipeline bundle must therefore go through a straightening process after the reeling off, and this occurs by means of a suitable straightening device. During the activity to which the pipeline here is exposed, it is important that the compression resistant core keeps the individual pipes in their proper places in the cross section, so that they do not shift and yield, thereby failing to contribute, in the measure intended, to straighten the pipeline cable.

When the pipeline bundle is not exposed to said external pressure activity, the pipelines will be able to move, as required among themselves, so that one achieves the effect which the helical winding of the pipeline is supposed to give.

As material for the pipelines one can use ordinary steel or stainless steel, as required.

In addition to the pipelines shown in the cross section, smaller pipelines may also be inserted, for control functions, remote control of valves, etc., and/or electrical lines. These lines can be inserted on the cross section as a special cable of lines, for example in the core, or individually.

Between pipelines 3 and 4 sealing members 11 of a suitable material are inserted.

The drawing also shows a membrane 10, which forms a waterproof division between the core of filler material 5 and the filler material 6. With stippled lines one has suggested a possible waterproof membrane 12, lying in the filler material 6.

In the embodiment the pipelines 2, 3 and 4 are supposed to be loose in relation to the core of filler material and the filler material; that is to say, they will slide axially in relation to each other and in relation to the filler material along the helical lines of the pipeline cable.

In special cases adhesion between filler material and the pipelines may also occur. This presupposes that the content of the filler material is of such an elasticity that it can absorb the longitudinal displacements which will occur during the movements of the pipelines.

In the embodiment shown the individual pipelines are arranged symmetrically around a central longitudinal cable axis. The cable or bundle may, however, have other configurations viewed in the cross section and the individual pipelines, electrical cables, optical fibres, etc. may be arranged unsymmetrically with respect to the said longitudinal axis. The number of pipelines etc. may also vary.

## Claims

1. A pipeline cable for use under water and comprising a number of individual rigid steel pipelines which follow helical lines in the cable, filler material around and between the pipelines, a protective sheath surrounding the pipelines and filler material, and a core of filler material (5) provided with helical tracks for receiving at last some of said pipelines, whereby the pipelines (3, 4) are embedded around the core (5) in such a way that they can move lengthwise without any hindrance from each other or from the filler material, characterized in that the core (5) is pressure resistant so that, during a radial compressive stress against the sheath, a transfer of force occurs through the sheath and filler material to the pipelines which thereby are fixed with respect to the filler material and absorb tensile stress exerted on the cable.

2. A pipeline cable according to claim 1, characterized in that the core (5) is built up by compression resistant material, for example, a suitable plastic material, possibly with components added to adjust the specific weight of the cable.

3. A pipeline cable according to claim 1 or 2, characterized in that the filler material (6) between the pipelines (3, 4) and the surrounding sheath (9) is of an especially heat-insulating material, for example PVC.

4. A pipeline cable according to one of the preceding claims, characterized in that longitudinal sealing elements are inserted between the helically laid pipelines (3, 4).

5. A pipeline cable according to one of the preceding claims, characterized in that the pipelines (3, 4) in the cross section of the pipelines bundle are surrounded by a water proof membrane (10; 12).

6. A pipeline cable according to one of the preceding claims, characterized in that it at relatively short intervals is supplied with waterproof transversal barrier devices in the area of the filler material.

7. A pipeline cable according to one of the preceding claims, characterized in that a number of thinner pipelines and/or electric cables, optical fibres, etc., lie embedded in the filler material or the core of filler material either individually or as a special, bundle of lines.

8. A pipeline cable according to one of the preceding claims, characterized in that the outer sheath is reinforced to be able to absorb tensile forces.

## Patentansprüche

1. Rohrleitungskabel zur Verwendung unter Wasser, die eine Anzahl individueller, steifer Stahlrohrleitungen umfasst, die schraubenförmigen Linien im Kabel folgen, sowie Fühlstoffe rundum die und zwischen den Rohrleitungen, eine die Rohrleitungen und die Füllstoffe umgebende Schutzhülle sowie ein mit schraubenförmigen Nuten für die Aufnahme mindestens einiger der Rohrleitungen versehener Kern aus Füllstoffen, wodurch die Rohrleitungen (3, 4) um den Kern (5) auf solche Weise eingebettet werden, dass sie sich der Länge nach ohne Behinderung untereinander oder seitens der Füllstoffe bewegen können, dadurch gekennzeichnet, dass der Kern (5) so druckbeständig ist, dass unter einer radialen Zusammenpressungsbelastung auf die Schutzhülle eine Überführung der Kraft durch die Hülle und die Füllstoffe auf die Rohrleitungen erfolgt, die dadurch in Hinsicht auf die Füllstoffe fixiert wird, und auf das Kabel ausgeübte Zugbelastungen absorbiert.

2. Rohrleitungskabel gemäss Patentanspruch 1, dadurch gekennzeichnet, dass der Kern (5) aus druckbeständigem Werkstoff aufgebaut ist, beispielsweise einem passenden Kunststoffmaterial, mit möglicherweise hinzugefügten Komponenten um das spezifische Gewicht des Kabels zu berichtigen.

3. Rohrleitungskabel gemäss Patentanspruch 1 oder 2, dadurch gekennzeichnet, dass die Füllstoff (6) zwischen den Rohrleitungen (3, 4) und der umgebenden Hülle (9) aus einem besonders gut wärmeisolierenden Werkstoff, beispielsweise PVC bestehen.

4. Rohrleitungskabel gemäss einem der vorhergehenden Patentansprüche, dadurch gekennzeichnet, dass längslaufende Dichtungselemente zwischen den schraubenförmig verlegten Rohrleitungen (3, 4) eingelegt sind.

5. Rohrleitungskabel gemäss einem der vorhergehenden Patentansprüche, dadurch gekennzeichnet, dass die Rohrleitungen (3, 4) im Querschnitt des Rohrleitungsbündels von einer wasserbeständigen Membran (10; 12) umgeben sind.

6. Rohrleitungskabel gemäss einem der vorhergehenden Patentansprüche, dadurch gekennzeichnet, dass es in verhältnismässig kurzen Abständen mit wasserbeständigen Quersperren im Bereich der Füllstoffe versehen ist.

7. Rohrleitungskabel gemäss einem der vorhergehenden Patentansprüche, dadurch gekennzeichnet, dass eine Anzahl dünnerer Rohrleitungen und/oder elektrischer Kabel, optischer Fasern etc. in den Füllstoffen oder dem Kern aus Füllstoffen eingebettet ist, entweder je für sich oder als ein spezielles Bündel von Leitungen.

8. Rohrleitungskabel gemäss einem der vorhergehenden Patentansprüche, dadurch gekennzeichnet, dass die Aussenhülle armiert ist um Zugspannungen absorbieren zu können.

## Revendications

1. Câble de canalisations pour l'utilisation sous l'eau et comprenant une pluralité de canalisations individuelles rigides en acier qui suivent des lignes hélicoïdales dans le câble, une matière de remplissage autour des canalisations et entre celles-ci, une gaine protectrice entourant les canalisations et la matière de remplissage, et une âme en matière de remplissage (5) comportant des pistes hélicoïdales pour recevoir au moins certaines desdites canalisations, les canalisations (3, 4) étant encastrées autour de l'âme (5) d'une manière telle qu'elles peuvent se déplacer longitudinalement sans se gêner mutuellement et sans être gênées par la matière de remplissage, caractérisé en ce que l'âme (5) résiste à la pression de sorte que, pendant un effort de compression radiale contre la gaine, un transfert de force a lieu par l'intermédiaire de la gaine et de la matière de remplissage vers les canalisations qui sont ainsi fixées par rapport à la matière de remplissage et absorbent l'effort de traction exercé sur le câble.

2. Câble de canalisations suivant la revendication 1, caractérisé en ce que l'âme (5) est constituée d'une matière résistant à la compression, par exemple une matière plastique appropriée, des composants étant éventuellement ajoutés pour ajuster le poids spécifique du câble.

3. Câble de canalisations suivant la revendication 1 ou 2, caractérisé en ce que la matière de remplissage (6) entre les canalisations (3, 4) et la gaine d'entourage (9) est en une matière spécialement thermiquement isolante, par exemple en chlorure de polyvinyle.

4. Câble de canalisations suivant l'une des revendications précédentes, caractérisé en ce que des éléments d'étanchéité longitudinaux sont insérés entre les canalisations disposées hélicoïdalement (3, 4).

5. Câble de canalisations suivant l'une des revendications précédentes, caractérisé en ce que les canalisations (3, 4) dans la section transversale du faisceau de canalisations sont entourées par une membrane étanche à l'eau (10; 12).

6. Câble de canalisations suivant l'une des revendications précédentes, caractérisé en ce qu'il comporte, à intervalles relativement courts, des barrières transversales étanches à l'eau dans la zone de la matière de remplissage.

7. Câble de canalisations suivant l'une des revendications précédentes, caractérisé en ce qu'une pluralité de canalisations de plus petit diamètre et/ou de câbles électriques, de fibres optiques, etc., est noyée dans la matière de remplissage ou dans l'âme en matière de remplissage, individuellement ou sous la forme d'un faisceau spécial de lignes.

8. Câble de canalisations suivant l'une des revendications précédentes, caractérisé en ce que la gaine extérieure est renforcée de manière à être capable d'absorber les forces de traction.

EP 0 177 475 B1